# EUROPÄISCHE PATENTSCHRIFT

(11) **EP 1 619 482 B1**
(45) Veröffentlichungstag und Bekanntmachung des Hinweises auf die Patenterteilung: **14.03.2012**
(21) Anmeldenummer: 05012300.9
(22) Anmeldetag: 08.06.2005
(51) Int. Cl.: G01F 23/284

(54) **Füllstands-Messvorrichtung mit einem Wellenleiter und einem Wellenanpasser**
Fluid level measuring device with a wave guide and a wave adapter
Capteur de niveau avec un guide d'onde et un adapteur d'onde

(30) Priorität: 14.07.2004 DE 102004034251
(43) Veröffentlichungstag der Anmeldung: 25.01.2006
(73) Patentinhaber: VEGA Grieshaber KG, 77709 Wolfach (DE)
(72) Erfinder: Fehrenbach, Josef, 77716 Haslach i. K. (DE); Motzer, Jürgen, 77723 Gengenbach (DE); Dietmeier, Jürgen, 77756 Hausach (DE); Kienzle, Klaus, 77736 Zell a. H. (DE); Falk, Johannes, 78122 St. Georgen (DE)
(74) Vertreter: Patentanwälte Westphal, Mussgnug & Partner

(56) Entgegenhaltungen:
- EP-A2- 1 396 710
- WO-A-97/12211
- DE-A1- 3 214 487
- US-A1- 2004 017 200

## Beschreibung

Die Erfindung bezieht sich auf eine Füllstands-Messvorrichtung mit einem Wellenhohlleiter und einem Wellenanpasser gemäß den oberbegrifflichen Merkmalen des Patentanspruchs 1

Eine solche Vorrichtung ist z. B. aus DE 32 14 487 A1 und der EP 1 396 710 A2 bekannt.

Zum Messen von Füllständen in Behältnissen sind Füllstands-Messvorrichtungen bekannt, welche ein Mikrowellensignal bzw. ein Radarsignal erzeugen und in Richtung der Oberfläche eines Mediums im Behältnis absenden. Eine von der Oberfläche reflektierte Welle wird von der Füllstands-Messvorrichtung empfangen, wobei die Laufzeit zwischen Aussenden und Empfangen der Welle bestimmt wird. Aus der Laufzeit kann die Entfernung zwischen Füllstands-Messvorrichtung und der Oberfläche des Mediums und damit der Füllstand in dem Behältnis bestimmt werden.

Eine typische Füllstands-Messvorrichtung besteht aus einem Wellenhohlleiter zum Leiten einer elektromagnetischen Welle, wobei der Wellenhohlleiter einen Endabschnitt aufweist, von dem aus die Welle mittels einer Antenne abgestrahlt wird. Den Übergang zwischen dem Wellenleiter und dem freien Raum bzw. der Antenne passt ein Wellenanpasser bzw. Wellenadapter an, welcher einen angepassten Außenumfang aufweist und welcher aus einem dielektrischen Material besteht, wobei der Wellenanpasser teilweise in den Endabschnitt des Wellenleiters hineinragt und teilweise aus diesem herausragt, um einen Wellenübergang der Welle aus dem Endabschnitt des Wellenleiters heraus oder in diesen hinein anzupassen. Außerdem ist bekannt, den Wellenanpasser in bzw. an dem Wellenleiter mittels eines Lötrings zu befestigen, wobei der Bereich der Lötstelle am kegelförmigen Wellenanpasser zuvor metallisiert wird, um den Lötring am Wellenanpasser anzulöten. Insbesondere dienen derartige Lötringe aus Metall in Verbindung mit Grafit-Dichtringen hauptsächlich der Abdichtung gegenüber dem Prozess im Behältnisinnenraum sowie der Druckabstützung zum kompensieren einer Ausdehnung der Metallteile bei hohen Temperaturdifferenzen zwischen Füllstands-Messvorrichtungskomponenten und dem Behältnisinnenraum.

Zur Befestigung des Wellenanpassers wird üblicherweise eine metallische Festklemm- bzw. Druckschraube verwendet, um den Wellenanpasser im Gehäuse bzw. am Hohlleiter zu befestigen. Durch stets vorhandene Toleranzen entsteht üblicherweise zwischen dem Außenumfang des Wellenanpassers und dem Innenumfang des Gehäuses bzw. des Hohlleiters ein Luftspalt. Durch den Hohlleiter zum Wellenanpasser laufende Wellen treten daher nicht nur an Kontaktstellen mit einem direkten Kontakt zwischen Wellenanpasser und Hohlleiter bzw. Gehäuse in den Wellenanpasser hinein, sondern zusätzlich über den Luftspalt, so dass ein doppelter Wellenübergang stattfindet. Dieser führt zu störenden Signalkompenenten.

Die Aufgabe der Erfindung besteht darin, eine Füllstands-Messvorrichtung vorzuschlagen, bei welcher die störende Wirkung eines Luftspalts zwischen Wellenanpasser und Wellenleiter reduziert oder vermieden wird.

Diese Aufgabe wird durch eine Füllstands-Messvorrichtung mit den Merkmalen des Patentanspruchs 1 gelöst.

Vorteilhafte Ausgestaltungen sind Gegenstand von abhängigen Ansprüchen.

Ein Ausführungsbeispiel wird nachfolgend anhand der Zeichnungen naher erläutert. Es zeigen:
- Fig. 1: eine Schnittdarstellung durch eine Füllstands- Messvorrichtung gemäß einem bevorzugten Ausführungs- beispiel;
- Fig. 2: in vergrößerter Ansicht einen Wellenanpasser aus Fig. 1; und
- Fig. 3: eine alternative Ausführungsform eines derartigen Wellenanpassers.

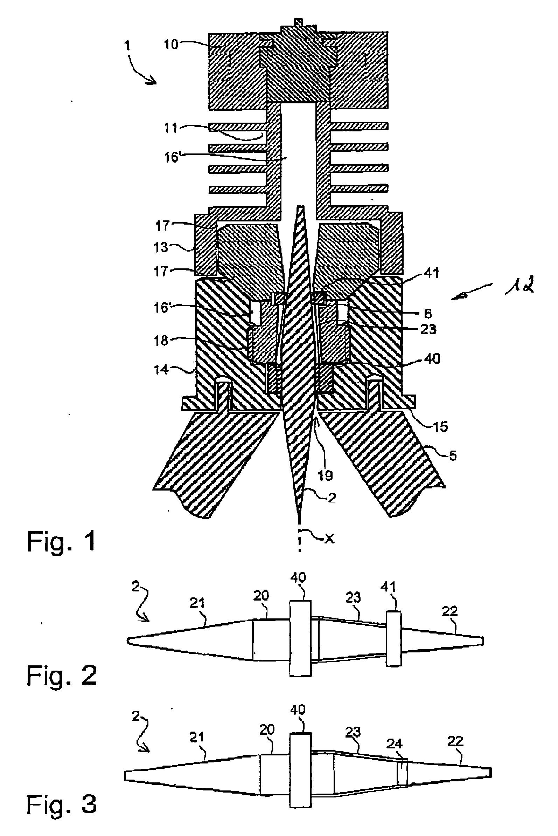

Fig. 1 zeigt schematisch Komponenten einer beispielhaften Füllstands-Messvorrichtung. Mit Blick auf den hervorzuhebenden Aspekt besteht die Füllstands-Messvorrichtung aus einem Wellenleiter 1 zum Leiten einer elektromagnetischen Welle und einem Wellenanpasser 2, der vorderseitig in dem Wellenleiter 1 zum Anpassen eines Übergangs der Welle aus dem Wellenleiter 1 in einen benachbarten Körper oder Raum eingesetzt ist.

Der Wellenleiter 1 ist insbesondere als Wellenhohlleiter 11 mit einer zentral durch diesen in axialer Richtung hindurchlaufenden Öffnung 16 ausgebildet. Die Öffnung 16 ist gemäß einer besonders bevorzugten Ausführungsform nicht mit einem festen Medium gefüllt, wobei dies prinzipiell jedoch auch möglich ist. Rückseitig weist der Wellenleiter 1 eine Aufnahme zum Einsetzen üblicher Komponenten, insbesondere einer Elektronik 10 zum Erzeugen einer elektromagnetischen Welle auf. Die elektromagnetische Welle wird in den Hohlleiter 11 eingekoppelt und durch diesen in vorderseitiger Richtung übertragen. Außerdem werden durch die Elektronik 10 von dem Hohlleiter 11 herangeführte elektromagnetische Wellen empfangen und verarbeitet, um letztendlich aus der Laufzeitdifferenz zwischen gesendeter und empfangener Welle auf den Füllstand eines Behältnisses zu schließen, in dem die Füllstands-Messvorrichtung eingesetzt ist. Bei den Wellen handelt es sich insbesondere um Mikrowellen bzw. Radarwellen.

Der Wellenleiter 1 weist vorderseitig einen Endabschnitt 14 mit einer Stirnseite 15 auf, wobei die axiale Öffnung 16 von dem rückseitigen Elektronikteil 10 bis zu der vorderseitigen Stirnseite 15 hindurchläuft. Bei dem dargestellten Ausführungsbeispiel besteht der vorderseitige Abschnitt 12 des Wellenleiters 1 aus zwei Komponenten 13, 14, welche eine Art Gehäuse für verschiedene darin aufgenommene weitere Komponenten ausbilden. Die verschiedenen Komponenten 12 - 18 sind in für sich bekannter Art und Weise ausgebildet und angeordnet und sind austauschbar gegen verschiedenartige äquivalente Komponenten.

Der vorderseitige Abschnitt 12 mit den Komponenten 13, 14 weist eine erweiterte Öffnung 16 auf, in welcher der Wellenanpasser 2 eingesetzt ist. Der Wellenanpasser 2 ist aus einem dielektrischen, insbesondere keramischen Material ausgebildet und dient zum Anpassen des Wellenübergangs der von dem Hohlleiter 11 herangeführten elektromagnetischen Welle an den hinsichtlich Durchmesser und Wandungsstärken verbreiterten Endabschnitt 12 - 15 und/oder eine Antenne 5, welche an der vorderseitigen Stirnseite 15 montiert ist. Die Antenne 5 ist beispielsweise als Hornantenne oder Parabolantenne ausgestaltet. Alternativ kann an der vorderseitigen Stirnseite 15 auch ein weiterer Wellenleiter mit hinsichtlich der Wellenleitung anderen physikalischen Dimensionen als der Wellenleiter 2 angesetzt sein, so dass eine Anpassung des Wellenübergangs erforderlich wird.

Der in Fig. 2 und gemäß alternativer Variante in Fig. 3 vergrößert dargestellte Wellenanpasser 2 weist einen mittleren Abschnitt 20 mit im wesentlichen zylindrischer Form auf. In rückseitiger und in vorderseitiger Richtung geht der mittlere Abschnitt 20 in jeweils einen konischen rückseitigen bzw. vorderseitigen Abschnitt 22, 21 über. Abhängig von dem anzupassenden Wellenübergang sind auch weitere Ausgestaltungen von Wellenanpassern bzw. Wellenadaptern bekannt.

Zur Befestigung des Wellenanpassers 2 in dem vorderseitigen Abschnitt 12 des Wellenleiters 1 wird der Wellenanpasser 2 mit seinem rückseitigen Abschnitt 22 in die Öffnung 16 des Wellenleiters 1 eingesetzt. Nachfolgend wird der vorderseitige der Endabschnitte 14 über den vorderseitigen Abschnitt 21 des Wellenanpassers 2 gesetzt und an dem rückseitigen der Endabschnitte 13 befestigt, insbesondere verschraubt. Dadurch, dass die vorderseitige Durchgangsöffnung in dem vorderseitigen der Endabschnitte 14 einen geringeren Durchmesser als der mittlere Abschnitt 20 des Wellenanpassers 2 aufweist, wird der Wellenanpasser 2 in dem vorderseitigen Abschnitt 12, der ein Gehäuse ausbildet, welches durch die vorderseitigen Endabschnitte 13, 14, ausgebildet wird, gehalten und in die Öffnung 16 in dem Wellenleiter 1 gespannt, wobei die Öffnung 16 einen geringeren Durchmesser als der mittlere Abschnitt 20 des Wellenanpassers 2 aufweist. Bei der dargestellten Ausführungsform dient eine Vielzahl zusätzlicher Komponenten zur verbesserten Halterung und Einspannung des Wellenanpassers 2 in dem Wellenleiter 1. Dabei führt der Wellenanpasser 2 mit seinem rückseitigen Abschnitt 22 durch zwei weitere Komponenten 17, 18, welche in der Öffnung 16' des Gehäuses 12 bzw. der vorderseitigen Endabschnitte 13, 14 angeordnet sind. Die Öffnung 16 erstreckt sich dabei durch diese weiteren Komponenten 17, 18 als eine Bohrung hindurch. Wie dies der schematischen Skizzierung entnehmbar ist, ist dabei die Öffnung 16 im Bereich zwischen der rückseitigen Innenwandung der Komponente 17 und der außenseitigen Wandung des rückseitigen und konisch verlaufenden Abschnitts 22 des Wellenanpassers 2 beabstandet, so dass sich zwischen diesen ein Spalt 6 ausbildet. Eine aus rückseitiger Richtung herangeführte Welle führt von dem Hohlleiter 11 aus in den rückseitigen Abschnitt 22 des Wellenanpassers 2 hinein und läuft durch diesen hindurch. Außerdem könnte die Welle vom Hohlleiter 11 aus kommend durch den Bereich des Gehäuses 12 weiterlaufend über den Spalt 6 mit einem entsprechend zweifachen Wellenübergang in den Wellenanpasser 2 eindringen. Dies würde zu den bekannten Störungen der abgestrahlten Welle führen.

Zur Vermeidung des Eindringens der Welle aus seitlicher Richtung über den Spalt 6 in den Wellenanpasser 2 weist der Wellenanpasser 2 eine außenseitige Metallschicht bzw. Metallisierung 23 auf. Die Metallisierung 23 verhindert einen Wellenübergang von dem Wellenanpasser 2 in seitlicher Richtung über den Spalt 6 in die Komponenten 12 - 14, 18 des Wellenleiters 1 und verhindert damit den zweifachen Wellenübergang im Bereich des Spalts 6. Ebenso wird ein Wellenübergang von dem Wellenleiter 1 aus über den Spalt 6 in den Wellenanpasser 2 verhindert.

Wie dies insbesondere aus Fig. 2 und Fig. 3 ersichtlich ist, ist die Metallisierung 23 des Wellenanpassers 2 von dessen mittleren Abschnitt 20 aus in rückseitiger Richtung ausgebildet. Die Metallisierung 23 ist dabei in rückseitiger Richtung soweit ausgebildet, dass eine sichere Kontaktierung und eine gute Überbrückung des Bereichs mit dem Spalt 6 bis zu einem gewünschten Kontaktierungspunkt ermöglicht wird.

Zur Verbesserung der mechanischen und/oder elektromagnetischen Ankopplung des Wellenanpassers 2 in dem Wellenleiter 1 bzw. in dessen vorderseitigem Endabschnitt 12 - 14 ist an dem Wellenanpasser 2 im Bereich von dessen mittleren Abschnitt 20 ein Kontaktring 40 angesetzt. Dieser Kontaktring 40 ist auf einfache Art und Weise an der Metallisierung 23 anlötbar. Gemäß der besonders bevorzugten Ausführungsform ist ein weiterer Kontaktring 41 im Bereich des rückseitigen Endes der Metallisierung 23 in entsprechender Art und Weise an dem Wellenanpasser 2 befestigt. Der vorderseitige der Kontaktringe 40 dient als Widerlager für den vorderseitigen der Endabschnitte 14 des Wellenleiters 1. Der rückseitige Kontaktring 41 dient als rückseitiges Widerlager zum Spannen des Wellenanpassers 2 gegen einen rückseitigen Anschlag, welcher in dem Wellenleiter 1 ausgebildet wird, wobei der rückseitige Anschlag durch eine der dargestellten Komponenten 17 ausgebildet wird. Die Kontaktringe 40, 41 können aber auch weggelassen werden.

Fig. 3 zeigt eine Ausführungsform, bei welcher der Wellenanpasser 2 in seinem rückseitigen Abschnitt 22 einen zylindrischen Abschnitt 24 aufweist, welcher zur Kontaktierung ausgebildet ist. Insbesondere kann ein rückseitiger Kontaktring 41 an einem solchen zylindrischen Abschnitt 24 besonders gut befestigt und kontaktiert werden.

Durch die Metallisierung 23 werden elektromagnetische Wellen im keramischen Material des Wellenanpassers 2 gehalten und können nach dessen Einsetzen in die Öffnung 16 des Wellenleiters 1 nicht in den Luftspalt 6 übergehen. Ermöglicht wird dadurch eine verbesserte Füllstands-Messvorrichtung mit einem Hohlleiter 11, in dem eine Hohlleiterwelle sich durch den metallischen Hohlleiter ausbreitet, um durch den Wellenanpasser 2, insbesondere einen Keramikkegel als Wellenanpasser 2 in einen benachbarten Körper oder ins Freifeld vorderseitig der Füllstands-Messvorrichtung überzugehen. Der Wellenanpasser 2 wird dabei über ein längeres Stück am Umfang metallisiert, um der Hohlleiterwelle in diesem Bereich eine definiert begrenzende Geometrie vorzugeben. Die Metallisierung 23 sowohl im zylindrischen als auch im konischen Bereich des den Wellenanpasser 2 ausbildenden Keramikkegels am Umfang soll dafür sorgen, dass sich zwischen dem Keramikteil des Wellenanpassers 2und der Metallwandung des Wellenleiters 1 oder eines Gehäuses 12 von diesem kein Spalt 6 mit einer störenden Auswirkung ausbildet. Durch diese Anordnung wird eine Störung des Mikrowellensignals in seiner Ausbreitung durch einen undefinierten Spalt 6, auch als Choke bezeichnet, verhindert oder verringert. Durch das Reduzieren oder Verhindern des Wellenübergangs im Bereich des Spalts 6 wird eine ungestörte Welle ausgesendet bzw. eine empfangene reflektierte Welle ohne eine Störung durch den Spalt 6 empfangen, so dass eine verbesserte Füllstandsmessung ermöglicht wird. Zur weiteren Verbesserung des Übergangs vom Luft-Hohlleiter 11 in den Keramikkegel des Wellenanpassers 2 bzw. in umgekehrter Richtung kann im Bereich des Übergangs vom Metallhohlleiter 11 auf den keramischen Leiter ein Kontaktring, insbesondere der Kontaktring 41 bzw. 40 angeordnet werden. Als Material für den Kontaktring 40, 41 wird Grafit besonders bevorzugt. Der rückseitige Kontaktring 41 ermöglicht einen besonders guten elektrischen Kontakt zwischen dem Metall, insbesondere Edelstahl des Wellenleiter 1, und der Metallisierung 23 am Wellenanpasser 2. Ein Grafitring als der Kontaktring 41 kann vorzugsweise auch eine Längenausdehnung abfangen, welche durch Temperaturunterschiede während des Betriebs verursacht wird. Der vorderseitige Kontaktring 40 besteht vorzugsweise aus Metall, insbesondere Edelstahl, so dass ein besonders einfaches Anlöten an die Metallisierung 23 des Wellenanpassers 2 ermöglicht wird. Dies ermöglicht insbesondere auch einen Einsatz bei hohen Temperaturen und/oder hohen Drücken und/oder in einer chemisch aggressiven Umgebung vorderseitig der Füllstands-Messvorrichtung.

Eine für sich bekannte Metallisierung im Kontaktbereich zum Lötring wird entsprechend der bevorzugten Ausführungsform über diesen Bereich hinaus über den Umfang des Wellenanpassers 2 erweitert, so dass mit dem erweiterten Bereich eine definierte Hohlleiter-Außenwand erhalten wird. Dies ermöglicht insbesondere eine einfachere Fertigung der verwendeten Komponenten aus Metall, da die metallischen Komponenten in dem konischen Bereich nicht mit einer sehr geringen Toleranz gefertigt werden müssen. Ein weiterer Vorteil besteht darin, dass zwischen dem Wellenanpasser 2 aus insbesondere Keramik und dem Wellenleiter 1 aus Metall kein störender Spalt 6 ausgebildet wird, welcher als Choke die Ausbreitung des Mirkowellensignals stören kann. Ein weiterer Vorteil besteht darin, dass eine elektrische Kontaktierung zwischen dem Wellenanpasser 2 mit der Metallisierung 23 und dem Hohlleiter 11 aus Metall über einen Grafitring als weiterem Kontaktring 41 ausbildbar ist.

Eine Vielzahl von alternativen Ausgestaltungen ist umsetzbar. Beispielsweise kann der Wellenanpasser 2 hinsichtlich seiner Form und Dimensionierung an die jeweiligen Gegebenheiten angepasst werden. Auch kann die Metallisierung 23 sich entsprechend den jeweiligen Umgebungsbedingungen mehr oder weniger weit über den Wellenanpasser 2 erstrecken. Neben der bevorzugten Ausführungsform mit einem vorderseitigen und nicht metallisierten konischen Abschnitt 21 des Wellenanpassers sind auch Ausführungen möglich, bei denen eine teilweise oder vollständige Metallisierung dieses Abschnitts vorgesehen wird. Auch der rückseitige Abschnitt 22 des Wellenanpassers 2 ist entsprechend den jeweiligen Dimensionen und Einsatzzwecken der Füllstands-Messvorrichtung mehr oder weniger weit metallisierbar. Auch hinsichtlich des Querschnitts ist nicht zwingend eine Beschränkung auf einen kreisförmigen Querschnitt des Wellenleiters 1 und des Wellenanpassers 2 erforderlich.

## Patentansprüche

1. Füllstands-Messvorrichtung mit
- einem Wellenhohlleiter (1, 11-14, 18) zum Leiten einer elektromagnetischen Welle, der einen vorderseitigen Endabschnitt (12 - 15) aufweist,
- einem Wellenanpasser (2, 20 - 24) aus dielektrischem Material, der in eine Öffnung (16) des vorderseitigen Endabschnitts (12-15) des Wellenleiters (1, 11-14, 18) eingesetzt ist und mit einem Ende aus diesem Endabschnitt (12-15) herausragt und derart dimensioniert ist, dass der Wellenübergang der Welle, die den Endabschnitt (12-15) des Wellenleiters (1, 11-14, 18) passiert, angepasst ist, wobei in einem Kontaktbereich zwischen dem Wellenanpasser (2) und dem Wellenleiter (1, 11-14, 18) ein elektromagnetisch leitfähiger Kontaktring (40) und zwischen dem Kontaktring (40) und dem Wellenanpasser (1, 11-14, 18) metallisches Übergangsmaterial angeordnet ist,
**dadurch gekennzeichnet, dass** sich das metallische Übergangsmaterial in Form einer oberflächlichen Metallisierung (23) über mehr als den direkten Kontaktbereich zwischen dem Wellenanpasser (2) und dem Wellenleiter (1, 11-14, 18) hinaus in die Öffnung (16) des Endabschnittes (12-15) des Wellenleiters (1, 11-14, 18) bis zu einem von Metallisierung freien Wellenanpasser-Endabschnitt (22) hinein erstreckt.

2. Füllstands-Messvorrichtung nach Anspruch 1,
**dadurch gekennzeichnet, dass** der Wellenanpasser (2) in den Wellenleiter (1, 11-14, 18) hinein eine konische Form aufweist.

3. Füllstands-Messvorrichtung nach Anspruch 1 oder 2,
**dadurch gekennzeichnet , dass** ein aus dem Endabschnitt (15) des Wellenhohlleiters (1, 11-14, 18) herausragender Abschnitt (21) des Wellenanpassers (2) in eine Antenne (5) hineinragt.

4. Füllstands-Messvorrichtung nach einem der vorstehenden Ansprüche 1 bis 3,
**dadurch gekennzeichnet , dass**
sich die Metallisierung (23) in Wellenausbreitungsrichtung (X) so weit über den Wellenanpasser (2) erstreckt, dass die elektromagnetische Welle aus dem Wellenleiter (1, 11-14, 18) oder aus dem Wellenanpasser (2) heraus in einen Spalt (6) zwischen dem Wellenanpasser (2) und dem Wellenhohlleiter (1, 11-14, 18) in den Kontaktbereich (19) oder benachbart dazu nicht eindringen kann.

5. Füllstands-Messvorrichtung nach einem vorstehenden Anspruch,
**dadurch gekennzeichnet , dass**
im Endbereich der Metallisierung (23) ein elektromagnetisch leitfähiger Kontaktring (41) zwischen dem metallisierten Wellenanpasser (2) und dem Wellenhohlleiter (1, 11-14, 18) angeordnet ist.

6. Füllstands-Messvorrichtung nach Anspruch 5,
**dadurch gekennzeichnet , dass**
der Kontaktring (40, 41) aus einem Werkstoff mit Metall- oder Grafitgehalt ausgebildet ist.

7. Füllstands-Messvorrichtung nach Anspruch 5 oder 6,
**dadurch gekennzeichnet , dass**
der Wellenanpasser (2) im Bereich unter dem Kontaktring (40, 41) einen zylindrischen Außenumfang (24) aufweist.

8. Füllstands-Messvorrichtung nach einem vorstehenden Anspruch,
**dadurch gekennzeichnet , dass**
der Wellenhohlleiter (1, 11-14, 18) aus einem Hohlleiter (11) und einem davor angesetzten Gehäuse (12 - 14) zum Anschließen einer Antenne (5) und/oder zum Befestigen der Anordnung in einer Behältniswandungsöffnung ausgebildet ist, wobei der Wellenanpasser (2) beidseitig zumindest teilweise aus dem Bereich des Gehäuses (12 - 14) herausragt.

## Claims

1. A filling level measurement apparatus with
- a wave guide tube (1, 11 - 14, 18) for guiding an electromagnetic tube which has an end portion (12 - 15) on the front side,
- a wave adapter (2, 20 - 24) of dielectric material which is inserted into an opening (16) in the end portion (12 - 15) of the wave guide tube (1, 11 - 14, 18) on the front side and projects with one end out of this end portion (12 - 15) and is dimensioned in such a way that the wave transition is adapted to the wave which passes the end portion (12 - 15) of the wave guide (1, 11 - 14, 18), wherein an electromagnetically conductive contact ring (40) is arranged in a contact area between the wave adapter (2) and the wave guide (1, 11 - 14, 18) and metallic transition material is arranged between the contact ring (40) and the wave adapter (1, 11 - 14, 18), **characterized in that** the metallic transition material extends in the form of a surface metallization (23) beyond more than the direct contact area between the wave adapter (2) and the wave guide (1, 11 - 14, 18) into the opening (16) in the end portion (12 - 15) of the wave guide (1, 11 - 14, 18) as far as an end portion (22) of the wave adapter free of metallization.

2. A filling level measurement apparatus according to claim 1, **characterized in that** the wave adapter (2) has a conical shape into the wave guide (1, 11 - 14, 18).

3. A filling level measurement apparatus according to claim 1 or 2, **characterized in that** a portion (21) of the wave adapter (2) projecting out of the end portion (15) of the wave guide (1, 11 - 14, 18) projects into an aerial (5).

4. A filling level measurement apparatus according to any one of the preceding claims 1 to 3, **characterized in that** the metallization (23) extends so far beyond the wave adapter (2) in the wave extension direction (X) that the electromagnetic wave cannot pass out of the wave guide (1, 11 - 14, 18) or out of the wave adapter (2) into a gap (6) between the wave adapter (2) and the wave guide tube (1, 11 - 14, 18) into the contact area (19) or adjacent to it.

5. A filling level measurement apparatus according to any preceding claim, **characterized in that** an electromagnetically conductive contact ring (41) is arranged between the metallized wave adapter (2) and the wave guide tube (1, 11 - 14, 18) in the end region of the metallization (23).

6. A filling level measurement apparatus according to claim 5, **characterized in that** the contact ring (40, 41) is formed from a material with a content of metal or graphite.

7. A filling level measurement apparatus according to claim 5 or 6, **characterized in that** the wave adapter (2) has a cylindrical external periphery (24) in the region below the contact ring (40, 41).

8. A filling level measurement apparatus according to any preceding claim, **characterized in that** the wave guide tube (1, 11 - 14, 18) is formed from a guide tube (11) and a housing (12 - 14) mounted in front for the attachment of an aerial (5) and /or for fastening the arrangement in an opening in a container wall, wherein the wave adapter (2) projects on both sides at least in part out of the region of the housing (12 - 14).

## Revendications

1. Capteur de niveau comportant :
- un guide d'onde (1, 11-14, 18) pour guider une onde électromagnétique, ayant un segment d'extrémité (12-15), côté avant,
- un adaptateur d'onde (2, 20-24) en un matériau diélectrique engagé dans une ouverture (16) côté avant du segment d'extrémité (12-15) du guide d'onde (1, 11-14, 18) et dépassant par une extrémité de ce segment d'extrémité (12-15) en étant dimensionné pour adapter la transition de l'onde qui passe par le segment d'extrémité (12-15) du guide d'onde (1, 11-14, 18), dans une zone de contact entre l'adaptateur d'onde (2) et le guide d'onde (1, 11-14, 18), il est prévu un anneau de contact (40) à conduction électromagnétique et entre l'anneau de contact (40) et l'adaptateur d'onde (1, 11-14, 18), il est prévu un matériau de transition métallique,
capteur **caractérisé en ce que**
le matériau de transition métallique sous la forme d'une métallisation de surface (23) sur plus de la zone de contact direct entre l'adaptateur d'onde (2) et le guide d'onde (1, 11-14, 18) s'étend dans l'ouverture (16) du segment d'extrémité (12-15) du guide d'onde (1, 11-14, 18), jusqu'à un segment d'extrémité d'adaptateur d'onde (22) sans métallisation.

2. Capteur de niveau selon la revendication 1,
**caractérisé en ce que**
l'adaptateur d'onde (2) a une forme conique dans le guide d'onde (1, 11-14, 18).

3. Capteur de niveau selon la revendication 1 ou 2,
**caractérisé en ce que**
un segment (21) de l'adaptateur d'onde (2) dépassant du segment d'extrémité (15) du guide d'onde (1, 11-14, 18), pénètre dans une antenne (5).

4. Capteur de niveau selon l'une des revendications précédentes 1 à 3,
**caractérisé en ce que**
la métallisation (23) s'étend dans la direction de déploiement de l'onde (X) assez loin sur l'adaptateur d'onde (2) pour que les ondes électromagnétiques ne puissent pénétrer à partir du guide d'onde (1, 11-14, 18) ou de l'adaptateur d'onde (2) dans un intervalle (6) entre l'adaptateur d'onde (2) et le guide d'onde (1, 11-14, 18) pour ne pas pénétrer dans la zone de contact (19) ou au voisinage de celle-ci.

5. Capteur de niveau selon l'une des revendications précédentes,
**caractérisé par**
un anneau de contact (41) à conduction électromagnétique dans la zone d'extrémité de la métallisation (23) installé entre l'adaptateur d'onde métallisé (2) et le guide d'onde (1, 11-14, 18).

6. Capteur de niveau selon la revendication 5,
**caractérisé en ce que**
l'anneau de contact (40, 41) est en un matériau avec une teneur en métal ou en graphite.

7. Capteur de niveau selon la revendication 5 ou 6,
**caractérisé en ce que**
l'adaptateur d'onde (2) comporte une cavité cylindrique (24) au niveau bas de l'anneau de contact (40, 41).

8. Capteur de niveau selon l'une des revendications précédentes,
**caractérisé en ce que**
le guide d'onde (1, 11-14, 18) se compose d'un guide d'onde (11) et d'un boîtier (12=14) issu de celui-ci pour brancher une antenne (5) et/ou fixer le montage dans une ouverture relativement sans paroi, l'adaptateur d'onde (2) dépassant de part et d'autre au moins en partie de la zone du boîtier (12-14).
